(19) Europäisches Patentamt / European Patent Office / Office européen des brevets

(11) **EP 2 212 579 B1**

(12) **FASCICULE DE BREVET EUROPEEN**

(45) Date de publication et mention de la délivrance du brevet:
**13.07.2011 Bulletin 2011/28**

(21) Numéro de dépôt: **08833538.5**

(22) Date de dépôt: **18.08.2008**

(51) Int Cl.:
*F16D 48/08* *(2006.01)*

(86) Numéro de dépôt international:
**PCT/FR2008/051503**

(87) Numéro de publication internationale:
**WO 2009/040487 (02.04.2009 Gazette 2009/14)**

(54) **PROCEDE D'ASSISTANCE AU DEMARRAGE EN COTE D'UN VEHICULE MOTORISE**

VERFAHREN ZUR STARTHILFE FÜR ANFAHREN AN EINER STEIGUNG

METHOD FOR HILL START ASSISTANCE FOR MOTOR VEHICLE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.09.2007 FR 0757823**

(43) Date de publication de la demande:
**04.08.2010 Bulletin 2010/31**

(73) Titulaire: **Renault s.a.s.**
**92100 Boulogne-Billancourt (FR)**

(72) Inventeurs:
• **DE RINALDIS, Alessandro**
  **F-75018 Paris (FR)**
• **MALLET, Mickaël**
  **F-78180 Montigny-le-bretonneux (FR)**
• **POTHIN, Richard**
  **F-78760 Jouars-pontchartrain (FR)**
• **LE VOURCH, Yves**
  **F-78150 Le Chesnay (FR)**

(56) Documents cités:
EP-A- 1 628 032     DE-A1- 10 008 822
DE-A1- 10 242 122     FR-A- 2 825 434
GB-A- 2 324 583

EP 2 212 579 B1

**Description**

L'invention concerne un procédé d'assistance au démarrage en côte d'un véhicule motorisé.

L'invention concerne également un dispositif d'assistance au démarrage en côte du véhicule motorisé, associé au procédé.

L'invention concerne encore un véhicule comprenant un tel dispositif.

Lors d'un démarrage en côte, et en l'absence de solution d'assistance, le conducteur peut être surpris par le recul du véhicule.

Les constructeurs ont donc proposé des solutions visant à remédier à cet inconvénient.

Ces solutions sont basées sur des techniques diverses. Parmi celles-ci, certaines sont basées sur la détermination du couple d'embrayage pour maintenir le véhicule immobile, à partir de la connaissance du couple moteur.

On peut par exemple citer le document DE 102 421 22 (D1) dans lequel on propose de maintenir le frein du véhicule actif pour une durée déterminée afin de faciliter la manoeuvre de démarrage en côte du conducteur, le frein étant relâché si certaines conditions sont remplies, et entre autres si le couple d'embrayage dépasse un seuil minimum correspondant à l'immobilité du véhicule dans la pente.

Toutefois, le couple d'embrayage est estimé de façon peu précise dans D1. Une telle imprécision implique que le couple appliqué aux roues motrices, par l'intermédiaire de la transmission, peut se situer en dessous du seuil nécessaire pour assurer un démarrage en côte qui est sûr, c'est-à-dire ne générant en particulier pas de recul du véhicule.

Les documents DE-A1-100 08 822 et FR-A-282 54 34 montrent la prise en compte des accessoires du véhicule dans le calcul du couple d'embrayage.

Un objectif de l'invention est de pallier à ces inconvénients.

Pour atteindre cet objectif, il est proposé un procédé d'assistance au démarrage en côte d'un véhicule motorisé comprenant un embrayage et une transmission entre l'embrayage et les roues motrices du véhicule, dans lequel on détermine un couple d'embrayage pour maintenir le véhicule immobile à partir de la connaissance du couple moteur, caractérisé en ce que le couple d'embrayage est déterminé en prenant en compte la part du couple moteur dédiée au fonctionnement des moyens constitutifs du véhicule autres que l'embrayage.

Pour atteindre cet objectif, il est encore prévu un dispositif d'assistance au démarrage en côte d'un véhicule motorisé selon la revendication 1.

D'autres caractéristiques, buts et avantages de la présente invention apparaîtront à la lecture de la description détaillée qui va suivre.

Le procédé prend en compte l'influence de la part du couple moteur dédié au fonctionnement d'autres moyens que l'embrayage, constitutifs du véhicule, qui jouent sur la valeur du couple d'embrayage.

Il est basé sur un bilan d'équilibre des moments au niveau du vilebrequin du moteur. Le couple au vilebrequin peut être associé au couple roue car le véhicule est à l'arrêt.

Dans un premier mode de réalisation ne faisant pas partie de l'invention, le couple d'embrayage $C_{emb}$ est déterminé par ce bilan qui fournit la relation :

$$C_{emb} = C_{me} - C_{me,off} - J\dot{\omega}_m \ (1)$$

où $C_{mc}$ est le couple estimé du moteur, $C_{me,off}$ est le quota estimé de couple moteur dédié au fonctionnement des accessoires du véhicules, le produit $J\omega_m$ est le couple équivalent aux moyens du moteur qui présentent un mouvement rotatif dépendant du régime moteur (lié à toutes les parties rotatives).

Le couple moteur $C_{me}$ est estimé en utilisant un modèle du moteur dans un calculateur dédié à cette fin.

La part du couple moteur dédié au fonctionnement des autres moyens constitutifs du véhicule peut ainsi se séparer en deux types de contributions, représentés par les couples $C_{me,off}$ (deuxième couple équivalent) et $J\omega_m$ (premier couple équivalent).

Le couple $C_{me,off}$ est estimé en considérant celui-ci comme la valeur résiduelle du couple moteur $C_{me}$ lorsque (i) le moteur du véhicule est débrayé, (ii) le régime moteur est stabilisé et (iii) en l'absence de toute action sur la pédale d'accélérateur du véhicule.

De manière non limitative, les accessoires en cause peuvent être la direction assistée, le compresseur faisant parti du système de climatisation de l'habitacle du véhicule, la ventilation du moteur et de l'habitacle, l'alternateur.

Le couple $J\dot{\omega}_m$ comprend deux composantes : le moment d'inertie J équivalent des moyens du moteur présentant un mouvement rotatif dépendant du régime moteur, et la dérivée du régime moteur $\dot{\omega}_m$.

Le moment d'inertie J est connu, et forme donc une donnée d'entrée pour déterminer le couple d'embrayage, sans nécessiter un(e) quelconque calcul/estimation.

Pour déterminer la dérivée du régime moteur $\dot{\omega}_m$, la vitesse de rotation du moteur est déterminée au moyen d'un capteur dédié (non représenté), puis on dérive la vitesse ainsi obtenue par des moyens de calculs embarqués sur le véhicule (micro-processeur embarqué). Eventuellement, les moyens de calculs effectuent une étape de filtrage des données ainsi dérivées.

Connaissant ainsi les différents termes de droite de la relation (1), on en déduit le couple d'embrayage.

Pour l'application considérée, à savoir le démarrage en côte d'un véhicule, il est essentiel de pouvoir bénéficier d'une bonne estimation du couple d'embrayage.

En effet, le véhicule étant à l'arrêt, le couple d'embrayage correspond au couple transmis aux roues motrices du véhicule. Ainsi, avec la connaissance du rayon de roulement des roues et du rapport de transmission des moments entre l'embrayage et les roues motrices, on peut en déduire l'effort passé au sol.

Un bilan d'équilibre des forces s'exerçant sur le véhicule permet de déterminer la valeur seuil permettant d'assurer un démarrage en côte efficace (l'effort passé au sol doit au moins égaler l'effet du poids du véhicule): cette valeur seuil dépendra notamment de la masse du véhicule et de la pente de la côte.

Ainsi, si le couple d'embrayage est mal évalué, il est en effet possible que le couple réel soit en dessous de la valeur seuil. Dans une telle situation, la force appliquée aux roues motrices du véhicule est alors insuffisante pour un démarrage en côte efficace.

Selon l'invention le couple d'embrayage n'est pas calculé directement par la relation (1), mais de la manière suivante :

on considère le couple d'embrayage comme une perturbation liée au régime moteur. On est alors amené à résoudre le système formé par les relations (2) et (3) suivantes :

$$\dot{\omega}_{m,p} = \frac{1}{J}\left(-C_{emb} + C_{me} - C_{me,off}\right) + K_1\left(\dot{\omega}_{m,p} - \dot{\omega}_m\right) \quad (2)$$

$$\dot{C}_{emb} = K_2\left(\dot{\omega}_{m,p} - \dot{\omega}_m\right) \quad (3)$$

Dans ces relations, on introduit les paramètres suivants : $\dot{\omega}_{m,p}$ qui représente la dérivée du régime moteur, perturbé ; $C_{emb}$ la dérivée du couple d'embrayage et $K_1$, $K_2$ des constantes. Les constantes $K_1$, $K_2$ sont choisies de sorte que le système soit stable. Les autres termes restent inchangés.

Les relations (2) et (3) forment un observateur de Kalman dont le principal intérêt est d'éviter de passer par la détermination de la dérivée du régime moteur pour estimer le couple d'embrayage.

La relation (2) correspond à un bilan modifié des moments exercés au niveau de la transmission entre l'embrayage et les roues motrices du véhicule, pour lequel est ajouté une perturbation $K_1(\dot{\omega}_{m,p} - \dot{\omega}_m)$ liée au régime moteur.

La relation (3) établit quant à elle un lien entre la dérivée du couple d'embrayage et la perturbation liée au régime moteur.

Le dispositif permettant de mettre en oeuvre le procédé comprend un embrayage, une transmission entre l'embrayage et les roues motrices du véhicule, et des moyens de calcul.

Les moyens de calcul sont agencés pour maintenir le véhicule immobile à partir de la connaissance du couple moteur $C_{me}$. Les moyens de calcul sont également agencés de sorte que le couple d'embrayage $C_{emb}$ est déterminé en prenant en compte la part du couple moteur dédiée au fonctionnement des moyens constitutifs du véhicule autres que l'embrayage.

## Revendications

1. Procédé d'assistance au démarrage en côte d'un véhicule motorisé comprenant un embrayage et une transmission entre l'embrayage et les roues motrices du véhicule, dans lequel on détermine un couple d'embrayage ($C_{emb}$) pour maintenir le véhicule immobile à partir de la connaissance du couple moteur ($C_{me}$), **caractérisé en ce que** le couple d'embrayage ($C_{emb}$) est déterminé en prenant en compte la part du couple moteur dédiée au fonctionnement des moyens constitutifs du véhicule autres que l'embrayage, à savoir :

- la prise en compte d'un premier couple équivalent $J\dot{\omega}_m$ lié aux moyens du moteur présentant un mouvement rotatif dépendant du régime moteur, où J est le moment d'inertie équivalent des moyens du moteur présentant un mouvement rotatif dépendant du régime moteur et $\dot{\omega}_m$ la dérivée du régime moteur,
- l'estimation d'un deuxième couple équivalent $C_{me,off}$ correspondant au quota de couple moteur dédié au fonctionnement des accessoires du véhicule,

le couple d'embrayage étant déterminé par le système formé par les relations suivantes :

$$\dot{\omega}_{m,p} = \frac{1}{J}\left(-C_{emb} + C_{me} - C_{me,off}\right) + K_1\left(\dot{\omega}_{m,p} - \dot{\omega}_m\right) \ (2)$$

$$\dot{C}_{emb} = K_2\left(\dot{\omega}_{m,p} - \dot{\omega}_m\right) \ (3)$$

où K1 et K2 sont des constantes et $\dot{\omega}_{m,p}$ représente la dérivée du régime moteur perturbé; et où la relation (2) correspondant à un bilan modifié des moments exercés au niveau du vilebrequin du moteur, pour lequel est ajouté une perturbation $K_1\{\dot{\omega}_{m,p}\text{-}\dot{\omega}_m\}$ liée au régime moteur ; la relation (3) établissant un lien entre la dérivée du couple d'embrayage ($C_{emb}$) et la perturbation liée au régime moteur.

2. Procédé selon la revendication précédente, **caractérisé en ce qu'**on estime le couple équivalent $C_{me,off}$ lié à l'ensemble des accessoires du véhicule, en considérant celui-ci comme la valeur résiduelle du couple moteur $C_{me}$ lorsque :

   • le moteur est débrayé ;
   • le régime moteur est stabilisé ;

en l'absence de toute action sur la pédale d'accélérateur du véhicule.

3. Dispositif d'assistance au démarrage en côte d'un véhicule motorisé, comprenant un embrayage et une transmission entre l'embrayage et les roues motrices du véhicule, ainsi que des freins et des moyens de calcul gérant, à partir de la connaissance du couple moteur ($C_{me}$), la pression appliquée sur les freins pour maintenir le véhicule immobile, **caractérisé en ce que** les moyens de calcul sont agencés de sorte que le couple d'embrayage ($C_{emb}$) est déterminé en prenant en compte la part du couple moteur dédiée au fonctionnement des moyens constitutifs du véhicule autres que l'embrayage, à savoir :

   - la prise en compte d'un premier couple équivalent $J\dot{\omega}_m$ lié aux moyens du moteur présentant un mouvement rotatif dépendant du régime moteur, où J est le moment d'inertie équivalent des moyens du moteur présentant un mouvement rotatif dépendant du régime moteur et $\dot{\omega}_m$ la dérivée du régime moteur,
   - l'estimation d'un deuxième couple équivalent $C_{me,off}$ correspondant au quota de couple moteur dédié au fonctionnement des accessoires du véhicule,

le couple d'embrayage étant déterminé par le système formé par les relations suivantes :

$$\dot{\omega}_{m,p} = \frac{1}{J}\left(-C_{emb} + C_{me} - C_{me,off}\right) + K_1\left(\dot{\omega}_{m,p} - \dot{\omega}_m\right) \ (2)$$

$$\dot{C}_{emb} = K_2\left(\dot{\omega}_{m,p} - \dot{\omega}_m\right) \ (3)$$

où K1 et K2 sont des constantes et $\dot{\omega}_{m,p}$ représente la dérivée du régime moteur perturbé; et où la relation (2) correspondant à un bilan modifié des moments exercés au niveau du vilebrequin du moteur, pour lequel est ajouté une perturbation $K_1(\dot{\omega}_{m,p}\text{-}\dot{\omega}_m)$ liée au régime moteur ; la relation (3) établissant un lien entre la dérivée du couple d'embrayage ($C_{emb}$) et la perturbation liée au régime moteur.

4. Véhicule motorisé, **caractérisé en ce qu'**il comprend un dispositif selon la revendication précédente.

## Claims

1. Hill start assistance method for a motor vehicle comprising a clutch and a transmission between the clutch and the drive wheels of the vehicle, wherein a clutch torque ($C_{emb}$) is determined to keep the vehicle immobile based on the knowledge of the engine torque ($C_{me}$), **characterized in that** the clutch torque ($C_{emb}$) is determined by taking into account the proportion of the engine torque dedicated to the operation of the constituent means of the vehicle other than the clutch, namely

   - taking into account a first equivalent torque $J\dot{\omega}_m$ associated with the means of the engine exhibiting a rotary movement dependent on the engine speed, in which J is the equivalent moment of inertia of the engine means exhibiting a rotary movement dependent on the engine speed and $\dot{\omega}_m$ the derivative of the engine speed,
   - estimating a second equivalent torque $C_{me,off}$ that corresponds to the quota of engine torque dedicated to the operation of the accessories of the vehicle,

   the clutch torque being determined by the system formed by the following relations:

$$\dot{\omega}_{m,p} = \frac{1}{J}\left(-C_{emb} + C_{me} - C_{me,off}\right) + K_1\left(\dot{\omega}_{m,p} - \dot{\omega}_m\right) \quad (2)$$

$$\dot{C}_{emb} = K_2\left(\dot{\omega}_{m,p} - \dot{\omega}_m\right) \quad (3)$$

   in which K1 and K2 are constants and $\dot{\omega}_{m,p}$ represents the derivative of the disturbed engine speed; and in which the relation (2) corresponding to a modified sum of the moments exerted on the crankshaft of the engine, for which a disturbance $K_1(\dot{\omega}_{m,p}-\dot{\omega}_m)$ associated with the engine speed is added;
   the relation (3) establishing a link between the derivative of the clutch torque ($C_{emb}$) and the disturbance associated with the engine speed.

2. Method according to the preceding claim, **characterized in that** the equivalent torque $C_{me,off}$ associated with all the accessories of the vehicle is estimated, by considering the latter to be the residual value of the engine torque $C_{me}$ when:

   • the engine is declutched;
   • the engine speed is stabilized;

   in the absence of any action on the vehicle's accelerator pedal.

3. Hill start assistance device for a motor vehicle, comprising a clutch and a transmission between the clutch and the drive wheels of the vehicle, and brakes and computation means managing, based on the knowledge of the engine torque ($C_{me}$), the pressure applied to the brakes to keep the vehicle immobile, **characterized in that** the computation means are arranged so that the clutch torque ($C_{emb}$) is determined by taking account of the proportion of the engine torque dedicated to the operation of the constituent means of the vehicle other than the clutch, namely

   - taking into account a first equivalent torque $J\dot{\omega}_m$ associated with the means of the engine exhibiting a rotary movement dependent on the engine speed, in which J is the equivalent moment of inertia of the engine means exhibiting a rotary movement dependent on the engine speed and $\dot{\omega}_m$ the derivative of the engine speed,
   - estimating a second equivalent torque $C_{me,off}$ that corresponds to the quota of engine torque dedicated to the operation of the accessories of the vehicle,

the clutch torque being determined by the system formed by the following relations:

$$\dot{\omega}_{m,p} = \frac{1}{J}\left(-C_{emb} + C_{me} - C_{me,off}\right) + K_1\left(\dot{\omega}_{m,p} - \dot{\omega}_m\right) \quad (2)$$

$$\dot{C}_{emb} = K_2\left(\dot{\omega}_{m,p} - \dot{\omega}_m\right) \quad (3)$$

in which K1 and K2 are constants and $\dot{\omega}_{m,p}$ represents the derivative of the disturbed engine speed; and in which the relation (2) corresponding to a modified sum of the moments exerted on the crankshaft of the engine, for which a disturbance $K_1(\dot{\omega}_{m,p}\text{-}\dot{\omega}_m)$ associated with the engine speed is added;
the relation (3) establishing a link between the derivative of the clutch torque ($C_{emb}$) and the disturbance associated with the engine speed.

**4.** A motor vehicle, **characterized in that** it comprises a device according to the preceding claim.

**Patentansprüche**

**1.** Verfahren für die Unterstützung beim Anfahren am Berg eines Kraftfahrzeugs, das eine Kupplung und zwischen der Kupplung und den Antriebsrädern des Fahrzeugs ein Getriebe enthält, wobei ein Kupplungsdrehmoment ($C_{emb}$), um das Fahrzeug unbeweglich zu halten, anhand der Kenntnis des Motordrehmoments ($C_{me}$) bestimmt wird, **dadurch gekennzeichnet, dass** das Kupplungsdrehmoment ($C_{emb}$) unter Berücksichtigung des Anteils des Motordrehmoments, der für den Betrieb von konstitutiven Mitteln des Fahrzeugs mit Ausnahme der Kupplung vorgesehen ist, bestimmt wird, nämlich:

- die Berücksichtigung des ersten äquivalenten Drehmoments $J\dot{\omega}_m$, das mit den Motormitteln in Beziehung steht, die eine von der Motordrehzahl abhängige Drehbewegung ausführen, wobei J das äquivalente Trägheitsmoment der Motormittel ist, die eine von der Motordrehzahl abhängige Drehbewegung ausführen, und $\dot{\omega}_m$ die Ableitung der Motordrehzahl ist,
- die Schätzung eines zweiten äquivalenten Drehmoments $C_{me,off}$, das dem Anteil des Motordrehmoments entspricht, der für die Funktion der Zusatzgeräte des Fahrzeugs vorgesehen ist,

wobei das Kupplungsdrehmoment durch das System bestimmt wird, das durch die folgenden Beziehungen gebildet ist:

$$\dot{\omega}_{m,p} = \frac{1}{J}\left(-C_{emb} + C_{me} - C_{me,off}\right) + K_1\left(\dot{\omega}_{m,p} - \dot{\omega}_m\right) \quad (2)$$

$$\dot{C}_{emb} = K_2\left(\dot{\omega}_{m,p} - \dot{\omega}_m\right) \quad (3)$$

wobei $K_1$ und $K_2$ Konstanten sind und $\dot{\omega}_{m,p}$ die Ableitung der gestörten Motordrehzahl ist; und/oder
wobei die Beziehung (2) einem modifizierten Gleichgewicht der ausgeübten Momente auf Höhe der Kurbelwelle des Motors entspricht, zu dem eine mit der Motordrehzahl in Beziehung stehende Störung

$$K_1\left(\dot{\omega}_{m,p} - \dot{\omega}_m\right)$$

hinzugefügt ist; wobei die Beziehung (3) eine Verbindung zwischen der Ableitung des Kupplungsdrehmoments ($C_{emb}$) und der mit der Motordrehzahl in Beziehung stehenden Störung herstellt.

2. Verfahren nach dem vorhergehenden Anspruch, **dadurch gekennzeichnet, dass** das äquivalente Drehmoment $C_{me,off}$, das mit der Gesamtheit der Zusatzgeräte des Fahrzeugs in Beziehung steht, geschätzt wird, indem dieses als Restwert des Motordrehmoments $C_{me}$ angesehen wird, wenn bei Abwesenheit jeder Einwirkung auf das Fahrpedal des Fahrzeugs:

- der Motor ausgekuppelt ist;
- die Motordrehzahl stabil ist.

3. Vorrichtung für die Unterstützung des Anfahrens am Berg eines Kraftfahrzeugs, mit einer Kupplung und zwischen der Kupplung und den Antriebsrädern des Fahrzeugs einem Getriebe sowie mit Bremsen und mit Rechenmitteln, die anhand der Kenntnis des Motordrehmoments ($C_{me}$) den Druck steuern, der auf die Bremsen ausgeübt wird, um das Fahrzeug unbeweglich zu halten, **dadurch gekennzeichnet, dass** die Rechenmittel so beschaffen sind, dass das Kupplungsdrehmoment ($C_{emb}$) unter Berücksichtigung des Anteils des Motordrehmoments, der für die Funktion der konstitutiven Mittel des Fahrzeugs mit Ausnahme der Kupplung vorgesehen ist, bestimmt wird, nämlich:

- die Berücksichtigung des ersten äquivalenten Drehmoments $J\dot{\omega}_m$, das mit den Motormitteln in Beziehung steht, die eine von der Motordrehzahl abhängige Drehbewegung ausführen, wobei J das äquivalente Trägheitsmoment der Motormittel ist, die eine von der Motordrehzahl abhängige Drehbewegung ausführen, und $\dot{\omega}_m$ die Ableitung der Motordrehzahl ist,
- die Schätzung eines zweiten äquivalenten Drehmoments $C_{me,off}$, das dem Anteil des Motordrehmoments entspricht, der für die Funktion der Zusatzgeräte des Fahrzeugs vorgesehen ist,

wobei das Kupplungsdrehmoment durch das System bestimmt wird, das durch die folgenden Beziehungen gebildet ist:

$$\dot{\omega}_{m,p} = \frac{1}{J}\left(-C_{emb} + C_{me} - C_{me,off}\right) + K_1\left(\dot{\omega}_{m,p} - \dot{\omega}_m\right) \qquad (2)$$

$$\dot{C}_{emb} = K_2\left(\dot{\omega}_{m,p} - \dot{\omega}_m\right) \qquad (3)$$

wobei $K_1$ und $K_2$ Konstanten sind und $\dot{\omega}_{m,p}$ die Ableitung der gestörten Motordrehzahl ist; und/oder wobei die Beziehung (2) einem modifizierten Gleichgewicht der ausgeübten Momente auf Höhe der Kurbelwelle des Motors entspricht, zu dem eine mit der Motordrehzahl in Beziehung stehende Störung

$$K_1\left(\dot{\omega}_{m,p} - \dot{\omega}_m\right)$$

hinzugefügt ist; wobei die Beziehung (3) eine Verbindung zwischen der Ableitung des Kupplungsdrehmoments ($C_{emb}$) und der mit der Motordrehzahl in Beziehung stehenden Störung herstellt.

4. Kraftfahrzeug, **dadurch gekennzeichnet, dass** es eine Vorrichtung nach dem vorhergehenden Anspruch enthält.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10242122
- DE 10008822 A1

- FR 2825434 A